# DEMANDE DE BREVET EUROPEEN

(11) **EP 2 267 170 A1**
(43) Date de publication de la demande: **29.12.2010**
(21) Numéro de dépôt: 10166031.4
(22) Date de dépôt: 15.06.2010
(51) Int. Cl.: C21B 5/02, B29B 17/02, F27D 3/00, C22B 7/00

(54) **Procédé de valorisation de pneus de véhicule automobile**

(30) Priorité: 23.06.2009 FR 0954272
(71) Demandeur: Fiday Gestion, 70360 Scey sur Saône (FR)
(72) Inventeur: Garnier, Jean-Pierre, 70190 PENNESIERES (FR); Tamisier, Pierre, 70360 RUPT SUR SAONE (FR); Lamirey, Philippe, 70000 RAZE (FR)
(74) Mandataire: Berger, Helmut

(57) **Abrégé**

L'invention concerne un procédé de valorisation de pneus, notamment de véhicule automobile, du type selon lequel on transforme les pneus en un broyat de morceaux de fil d'acier avec un résidu de caoutchouc.

Le procédé est **caractérisé en ce que** l'on coupe les fils d'acier lors du broyage de façon à ce qu'ils aient une longueur comprise entre quelques millimètres et 10 millimètres en comportant un taux de caoutchouc résiduel avantageusement inférieur à 10% en poids du broyat, et en ce que l'on introduit ce broyat dans des conteneurs en un matériau combustible de faible coût mais mécaniquement suffisamment résistant pour ne pas rompre avant qu'ils atteignent la zone de combustion oxydante au fond du four.

L'invention est utilisable pour la revalorisation de pneu de véhicule automobile et poids lourd.

## Description

L'invention concerne un procédé de valorisation de pneus de véhicule automobile, du type selon lequel on transforme par des opérations de broyage les pneus en un broyat comportant des morceaux de fil d'acier avec un résidu de caoutchouc et introduit le broyat dans un conteneur formant des mini-charges que l'on utilise dans des installations de fusion de métaux, tels que des cubilots ou des fours d'aciérie.

Des procédés sont déjà connus qui impliquent l'emploi, à titre de conteneurs, des boîtes métalliques dans lesquelles on compacte le broyat avant de mettre en place des moyens de maintien de ce broyat à l'état compacté à l'intérieur des boîtes. Or l'obligation d'utiliser des boîtes métalliques et de compacter le broyat dans celles-ci, présente l'inconvénient majeur que le coût du procédé connu est relativement élevé.

L'invention a pour but de pallier cet inconvénient.

Pour obtenir ce but, le procédé selon l'invention est **caractérisé en ce que** l'on applique une technologie de broyage permettant de couper les fils de façon à ce qu'ils aient une faible longueur à laquelle les fils ont une élasticité réduite, avantageusement comprise entre 2 millimètres et 10 millimètres en comportant un taux de caoutchouc résiduel avantageusement inférieur à 10% en poids du broyat et en ce que l'on introduit ce broyat à l'état non comprimé dans des conteneurs en un matériau combustible de faible coût, mais suffisamment résistants pour ne pas rompre avant qu'ils atteignent la zone de combustion oxydante au fond du four.

Selon une caractéristique de l'invention, on utilise avantageusement des sacs en carton, en papier, en en papier multicouches ou en polypropylène tissé monocouche.

Selon une autre caractéristique de l'invention, on utilise des sacs en papier multicouches, comprenant deux couches de papier d'une épaisseur de 90 microns chacune.

Selon encore une autre caractéristique, on utilise des sacs en papier multicouches, qui comportent trois couches d'épaisseur de 80 microns chacune.

Selon encore une autre caractéristique de l'invention, les conteneurs sont remplis par du broyat à l'aide d'un dispositif d'ensachage classique et sont ensuite fermés.

Selon encore une autre caractéristique de l'invention, les sacs sont fermés en les ligaturant ou en les cousant.

Le produit est **caractérisé en ce qu**'il constitue en conteneur en un matériau combustible de faible coût, tel que du carton et du papier ou du polypropylène, qui est rempli d'un broyat de pneus.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue schématique, en coupe, d'un cubilot à l'état chargé de ferraille et de mini-charges selon l'invention, formé par des conteneurs remplis d'un broyat de pneus usagers ;
- la figure 2 est une vue en perspective illustrant plusieurs conteneurs de broyat selon l'invention.

L'invention sera décrite ci-après dans son utilisation dans un cubilot à vent chaud, sans que cette application soit limitative. En effet, le procédé de l'invention est utilisable pour toute autre installation de fusion de métal, tels que par exemple des fours d'aciérie au gaz ou électrique et des cubilots à vent froid.

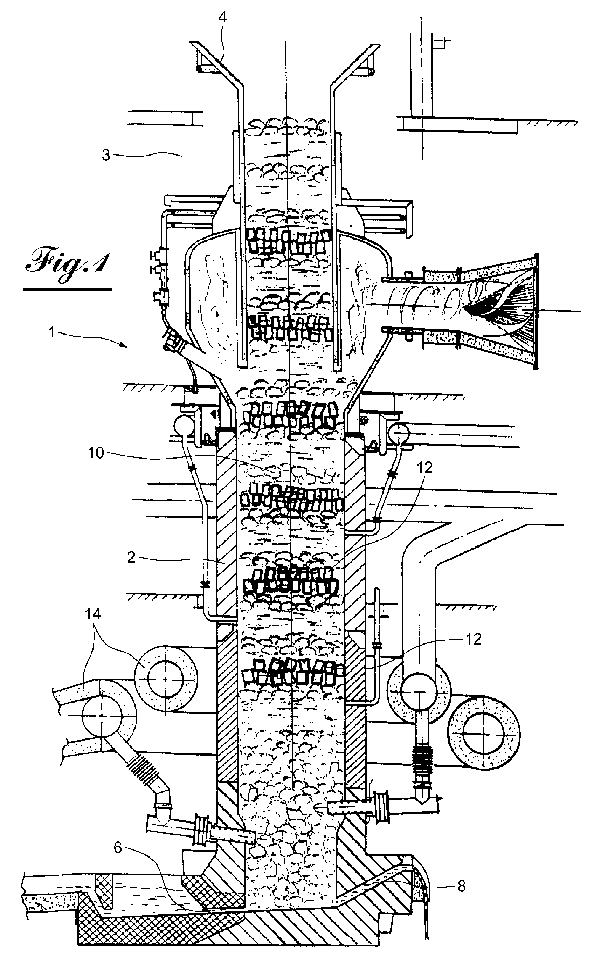

La figure 1 représente un cubilot classique noté 1. Le cubilot comporte un corps principal cylindrique 2 et une partie supérieure 3 avec, en haut, le gueulard 4. Le corps principal 2 du cubilot est un fût métallique par exemple d'environ 2 mètres de diamètre et 15 mètres de hauteur, garni de réfracteur à l'intérieur et refroidi par de l'eau à l'extérieur. Au gueulard 4 du cubilot sont vidées les charges métalliques contenant ferraille, fonte de récupération, coke, ferroalliage, fondant, préalablement dosés et pesés.

Comme le montre la figure, les charges sont disposées en couche à l'intérieur du cubilot. A titre d'exemple, environ 15 charges de 1,5 tonne peuvent être empilées dans le fût. Au pied du cubilot, on constate en 6 la sortie de la fonte liquide qui s'écoule en continue si bien que les charges métalliques solides descendent petit à petit dans le fût du cubilot et sont remplacées par l'apport de nouvelles charges au gueulard. Au dessus de la fonte liquide surnage le laitier qui contient les impuretés des charges et est évacué par un trou 8.

Il est connu que les charges doivent être dosées de manière à obtenir un bon rendement (proportion coke ferraille, coke/castine par exemple) et une analyse chimique conforme aux spécifications du produit que l'on souhaite obtenir en sortie du cubilot.

Les éléments qui constituent les charges doivent avoir une granulométrie adaptée au diamètre du fût du cubilot et adaptées entre elles. Par exemple une taille trop élevée relativement au diamètre du cubilot aura pour conséquence les accrochages dans celui-ci et une densité dans le fût trop faible pour un bon rendement en débit de fonte. De même l'homogénéité entre les différents éléments sera moins bonne du fait d'une surface de contact trop faible.

A l'opposé, des charges composées d'éléments trop petits, copeaux d'usinage, ferrosilicium en poudre, poussière de coke, sont nuisibles au fonctionnement du cubilot car il n'y aurait pas suffisamment de porosités au travers des charges pour permettre l'évacuation des gaz.

C'est pour cette raison que la plupart des éléments utilisés dans le cubilot et chargés au gueulard ont une granulométrie comprise approximativement entre D/2,5 et D/50, D étant le diamètre intérieur du cubilot.

Le procédé de l'invention résout les problèmes susmentionnés en utilisant, à titre de charge très économique, des mini-charges formées par un broyat obtenu à partir de pneus usagers de véhicule automobile et comportant un mélange de fil d'acier et de caoutchouc.

En se reportant à nouveau à la figure 1, qui montre en 10 des couches de charge de la matière de ferraille dans le cubilot 1, on constate qu'une partie de la ferraille utilisée classiquement est remplacée par des conteneurs 12 constituant des minis charges de broyat.

A cette fin, l'invention propose de produire par broyage de pneus usagers, à l'aide de broyeur, par exemple du type à meule et filières, un broyat qui comporte des fils d'acier coupés courts, d'une longueur comprise entre quelques millimètres et 10 millimètres, avantageusement entre 2 millimètres et 10 millimètres. Ce broyat comporte moins de caoutchouc résiduel car le broyage est plus fin et la séparation meilleure, en général, moins de 10%. Le broyat a de plus une densité relativement élevée.

Cependant, ce broyat comportant des fils d'acier très courts et un taux de caoutchouc relativement faible est difficile à utiliser en vrac avec de bons rendements. En effet dû à sa finesse, il y aurait des risques de disfonctionnement du fait de l'entraînement de fils dans le système de traitement des fumées.

Pour résoudre ce problème, le procédé selon l'invention prévoit d'introduire ce broyat dans des conteneurs réalisés en un matériau peu coûteux et combustible, avantageusement dans des cartons 14 et des sacs en papier ou polypropylène 16 d'une résistance mécanique appropriée. Il est avantageux d'utiliser des sacs en papier multicouches, soit avec deux couches de papier d'épaisseur de 90 microns chacune ou avec trois couches d'épaisseur de 80 microns chacune, ou simplement des sacs monocouche en polypropylène.

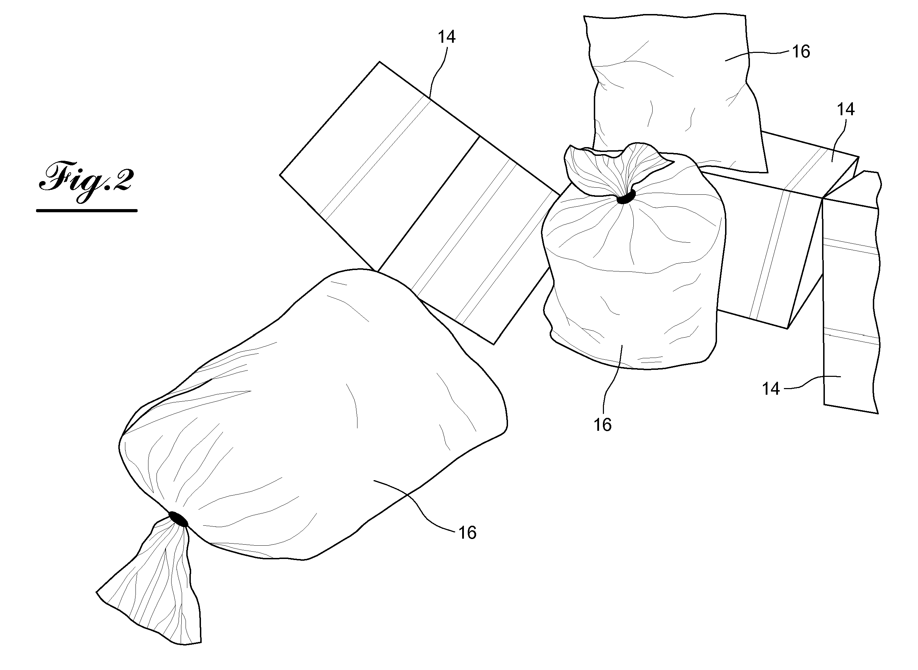

Les cartons et les sacs en papier ou polypropylène peuvent être remplis par du broyat, avec un dispositif classique d'ensachage, puis ils sont fermés, dans l'exemple représenté ligaturés ou cousus. La figure 2 montre, à titre d'exemple une pluralité de conteneurs, à titre d'exemple en forme de cartons 14 ou de sacs en papier ou polypropylène 16.

Les conteneurs remplis sont ensuite enfournés comme charge métallique dans le cubilot, de façon générale, dans le dispositif de fusion approprié, four électrique, cubilot ou haut fourneau.

Le procédé selon l'invention présente des multiples avantages. Ce procédé de broyage produit un ensemble de fils dont la densité apparente est plus élevée et comme ce fil coupé court est moins élastique que par le passé (effet de ressort), il n'est plus nécessaire de le compacter à l'intérieur d'un récipient métallique. Ce broyat plus dense peut donc être introduit directement dans des conteneurs en un matériau combustible de faible coût, tels que des cartons ou sacs de papier, ou sacs de polypropylène tissé type big bag. Les conteneurs selon l'invention sont suffisamment mécaniquement résistants, malgré les manutentions, pour éviter que le fil de broyat ne se retrouve en vrac dans le cubilot. Le procédé est très économique, d'un coût inférieur à 10 C/t pour les sacs en papier et inférieur à 15 C/t pour les sacs en polypropylène. Le broyat fin est emprisonné dans le conteneur, ce qui facilite sa manutention, et permet aux matières contenues dans le conteneur de descendre au fond du cubilot avant leur fusion. En effet, l'atmosphère du cubilot étant réductrice, les sacs ou cartons en papier ou polypropylène ne brûlent pas avant d'avoir atteint la zone de combustion oxydante au fond du cubilot et jouent donc un rôle protecteur vis-à-vis des matières contenues.

Ainsi, le fil est protégé ce qui permet d'obtenir un meilleur rendement à la fois pour l'acier du fil et pour le caoutchouc résiduel. Le broyat transformé en mini charges permet de maintenir une bonne porosité pour l'échappement des gaz dans le cubilot.

Les essais réalisés dans un cubilot à vent chaud du type représenté à la figure 1 montrent qu'il est possible de remplacer jusqu'à 60 % de charge en ferraille du cubilot par des minis-charges de broyat, sous la réserve de la teneur résiduelle en caoutchouc ne dépasse pas 10% du poids de la matière brute mise en conteneur. Si la teneur en caoutchouc est supérieure à 10% les émissions de gaz et de poussière risquent d'être très importantes par rapport au dimensionnement du système d'aspiration et de filtration des fumées du cubilot. Il est encore à noter que non seulement l'acier du fil de broyat est valorisé et permet de minimiser le coût des achats de ferraille, mais qu'en plus, la quantité de coke utilisée pour apporter l'énergie de fusion de la ferraille est minimisée grâce à l'apport en caoutchouc résiduel dans le broyat.

Les dimensions des sacs sont choisies en fonction du diamètre du cubilot ou du four de fusion, de manière à optimiser les coûts de production des conteneurs et leur utilisation. Dans la pratique, des sacs au volume de 10 à 300 litres sont souhaitables pour un optimum économique quant au fonctionnement du procédé et au coût de remplissage des sacs.

L'utilisation des conteneurs formés par des cartons et des sacs en papier ou polypropylène peut être étendue aux autres composants de charge. En effet, l'utilisation de sacs et cartons permet aussi le chargement partiel de matières moins onéreuses comme les déchets pulvérulents d'industries diverses, poussières de coke ou d'anthracite pouvant être chargé dans des sacs, à la place de coke, de ferroalliage en vrac et non compactés comme par exemple des molybdates et vanadate de calcium, des oxydes de molybdène ou de vanadium, de matières ferreuses fines comme les résidus de meulage, certains copeaux d'usinage très fins pour lesquels l'opération de briquetage ne fonctionne pas, de poussières contenant des oxydes de fer, des déchets valorisables, du minerai de fer préréduit, etc.

Il est possible aussi de faire des mélanges de poussières ou de déchets pulvérulents, de placer ces mélanges dans des sacs, de manière à faire réagir entre eux les différents constituants à la température de fusion du cubilot ou du four concerné.

## Revendications

1. Procédé de valorisation de pneus, notamment de véhicule automobile, du type selon lequel on transforme par broyage les pneus en un broyat comportant des morceaux de fil d'acier avec un résidu de caoutchouc, introduit le broyat dans des conteneurs formant des mini-charges et utilise ces mini-charges dans des installations de fusion de métaux, tels que des cubilots ou des fours d'aciérie, **caractérisé en ce que** l'on coupe les fils d'acier lors du broyage de façon à ce qu'ils aient une faible longueur à laquelle les fils ont une élasticité réduite, avantageusement comprise entre quelques millimètres et 10 millimètres en comportant un taux de caoutchouc résiduel avantageusement inférieur à 10% en poids du broyat, et **en ce que** l'on introduit ce broyat à l'état non compressé dans des conteneurs en un matériau combustible de faible coût mais mécaniquement suffisamment résistant pour ne pas rompre avant qu'ils atteignent la zone de combustion oxydante au fond du four.

2. Procédé selon la revendication 1, **caractérisé en ce qu'**on utilise des conteneurs en carton.

3. Procédé selon la revendication 1, **caractérisé en ce qu'**on utilise des conteneurs en forme de sacs en papier. 3.

4. Procédé selon la revendication 1, **caractérisé en ce qu'**on utilise des conteneurs en forme de sacs en polypropylène monocouche.

5. Procédé selon la revendication 3, **caractérisé en ce que** les sacs sont en papier multicouches.

6. Procédé selon la revendication 4, **caractérisé en ce que** les sacs en papier multicouches comportent deux couches de papier d'une épaisseur avantageusement de 90 microns chacune.

7. Procédé selon la revendication 5, **caractérisé en ce que** les sacs en papier multicouches comportent trois couches d'épaisseur avantageusement de 80 microns chacune.

8. Procédé selon une des revendications 1 à 7, **caractérisé en ce que** les conteneurs sont remplis par du broyat à l'aide d'un dispositif d'ensachage classique et sont ensuite fermés.

9. Procédé selon la revendication 8, **caractérisé en ce que** les sacs sont fermés en les ligaturant ou en les cousant.

10. Produit destiné à constituer des mini-charges à être chargées dans des installations de fusion de métal, à titre de matière de charge, **caractérisé en ce qu'**il constitue un conteneur en un matériau combustible de faible coût, tel que du carton, du papier, et ou du polypropylène qui est rempli d'un broyat de pneus selon l'une des revendications 1 à 9.
